# EUROPÄISCHE PATENTSCHRIFT

(11) **EP 1 409 940 B1**
(45) Veröffentlichungstag und Bekanntmachung des Hinweises auf die Patenterteilung: **18.05.2005**
(21) Anmeldenummer: 00927112.3
(22) Anmeldetag: 29.04.2000
(51) Int. Cl.: F27D 3/00, F27D 3/10, B65G 53/46

(54) **VERFAHREN ZUM EINTRAGEN KÖRNIGER FESTSTOFFE IN EINEN UNTER ÜBERDRUCK STEHENDEN BEHÄLTER**
METHOD OF CHARGING A PRESSURIZED CONTAINER WITH GRANULAR SOLIDS
PROCEDE D'INTRODUCTION DE MATIERES SOLIDES GRANULAIRES DANS DES CONTENEURS EN SURPRESSION

(30) Priorität: 18.10.1999 DE 19950101
(43) Veröffentlichungstag der Anmeldung: 21.04.2004
(73) Patentinhaber: Outokumpu Oyj, 02200 Espoo (FI)
(72) Erfinder: DEPPE, Rüdiger, D-60435 Frankfurt am Main (DE); KANSCHIK, Klaus, D-45327 Essen (DE); ORTH, Andreas, D-61381 Friedrichsdorf (DE)
(74) Vertreter: KEIL & SCHAAFHAUSEN
(86) Internationale Anmeldenummer: PCT/EP2000/003895
(87) Internationale Veröffentlichungsnummer: WO 2001/029496

(56) Entgegenhaltungen:
- DE-A- 3 311 655
- DE-C- 338 997
- US-A- 2 920 793
- US-A- 4 627 456
- US-A- 4 774 896

## Beschreibung

Die Erfindung betrifft ein Verfahren zum Eintragen körniger Feststoffe in einen unter einem Druck von mindestens 2 bar stehenden Druckbehälter, wobei die Feststoffe zunächst in einen unter Atmosphärendruck stehenden ersten Behälter und dann in einen darunter angeordneten zweiten Behälter mit variablem Druck gelangen, bevor sie in den Druckbehälter eingetragen werden, und wobei der erste und der zweite Behälter jeweils einen unteren Auslaufkanal und einen mit dem Auslaufkanal zusammenwirkenden bewegbaren Schieber aufweisen.

Schleusenvorrichtungen dieser Art, die mit bewegbaren Schiebern arbeiten, sind bekannt und z. B. bei einem Reaktor vorgesehen, wie im US-Patent 5 584 970 beschrieben. Hierbei strömen jedoch stets geringe Mengen an Gas vom Druckbehälter bis zum unter Atmosphärendruck stehenden Behälter und von dort in die Atmosphäre, was in bestimmten Fällen sehr nachteilig sein kann. Der Erfindung liegt deshalb die Aufgabe zugrunde, das eingangs genannte Verfahren so auszugestalten, daß ohne nennenswerten Materialverschleiß Feststoffe in den Druckbehälter eingetragen werden können, ohne daß Gase im Gegenstrom zu den Feststoffen in die Atmosphäre gelangen.

Die Aufgabe wird erfindungsgemäß dadurch gelöst, daß sich das Auslaufende des Auslaufkanals 20 bis 400 mm über dem Schieber in der Schließposition befindet, daß der Schieber in der Schließposition den Boden einer mindestens teilweise mit Feststoffen gefüllten Kammer bildet, daß die Kammer gasdicht mit dem Auslaufkanal verbunden ist und keine Gasdichtigkeit zwischen der Kammer und dem Schieber besteht, daß der Schieber in der Schließposition eine Feststoffschüttung trägt und eine vertikale Feststoffsäule von mindestens 1 m Höhe im Auslaufkanal und im Behälter besteht, und daß in der Schließposition Sperrgas von außen in die Kammer und in die Feststoffsäule gedrückt wird. Dieses Schleusverfahren ist insbesondere auch für heiße Feststoffe geeignet, die z. B. mit Temperaturen im Bereich von 300 bis 1300°C in den ersten Behälter gegeben werden.

Zweckmäßigerweise befinden sich der Schieber und mindestens teilweise auch die Kammer in einem Schiebergehäuse, welches den Feststoffzulauf für den darunter angeordneten Behälter aufweist.

Üblicherweise sorgt man dafür, daß die Feststoffschüttung in der Kammer in der Schließposition eine Mindesthöhe von 5 mm hat, damit der Bereich zwischen dem Kammerrand und dem Schieber weitgehend gasundurchlässig wird.

Der Druck im Druckbehälter liegt vorzugsweise im Bereich von 3 bis 20 bar. Das Gas im Druckbehälter kann von ganz unterschiedlicher Art sein, es kann z. B. toxische Wirkung haben oder es kann zu mindestens 50 Vol.-% aus Wasserstoff bestehen, so daß man verhindern muß, daß es mit dem Sauerstoff der Luft zusammentrifft.
Ausgestaltungsmöglichkeiten des Verfahrens werden mit Hilfe der Zeichnung erläutert. Es zeigt:
- Fig. 1: das Fließschema des Verfahrens und
- Fig. 2: die Abdichtung zwischen zwei Behältern mit unterschiedlichem Druck.

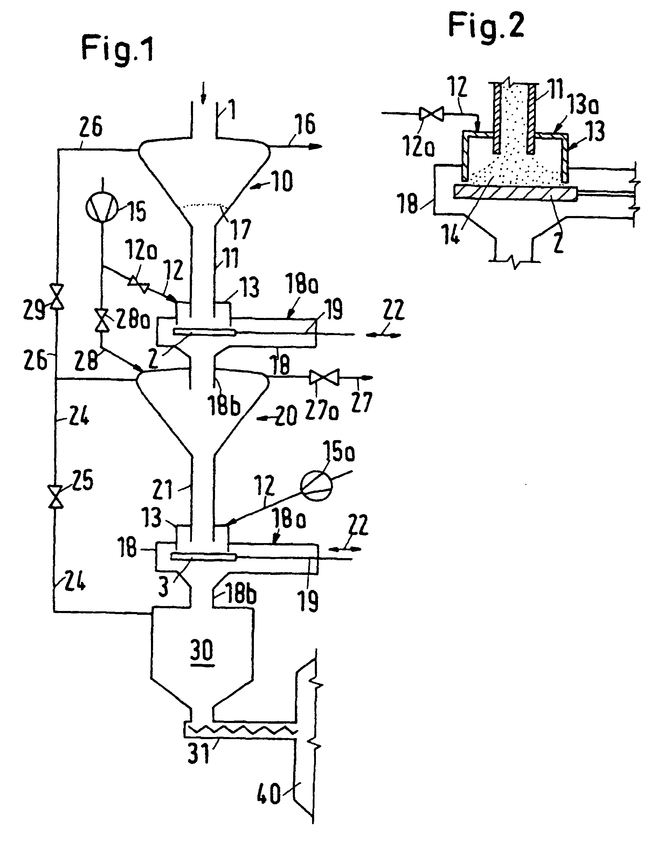

Gemäß Fig. 1 werden körnige, rieselfähige Feststoffe kontinuierlich oder diskontinuierlich von oben durch den Einlaß (1) in den ersten Behälter (10) gegeben, von wo aus sie bei geöffnetem Schieber (2) in den zweiten Behälter (20) fallen. Wenn dessen Schieber (3) geöffnet ist, fallen die Feststoffe zunächst in einen Vorratsbunker (30), der denselben Überdruck wie ein nachfolgender Reaktor (40) aufweist, der nur teilweise dargestellt ist. Der Bunker (30) ermöglicht es, daß Feststoffe, die von oben diskontinuierlich in den Bunker (30) gelangen, aufgrund des Feststoffvorrats im Bunker (30) kontinuierlich durch eine Förderschnecke (31) in den Reaktor (40) eingetragen werden können. Der Druck im Bunker (30) und im Reaktor (40) beträgt mindestens 2 bar und üblicherweise 3 bis 20 bar, doch kann er auch noch höher sein.

Der zweite Behälter (20) weist einen variablen Druck auf, der je nach Bedarf auf den Atmosphärendruck des ersten Behälters (10) oder den Druck im Behälter (30) eingestellt werden kann. Die zwischen zwei Behältern mit unterschiedlichem Druck nötige Abdichtung wird mit Hilfe der Fig. 2 erläutert. Hierbei wirken ein horizontal bewegbarer Schieber (2), eine das Auslaufende eines zum Behälter (10) gehörenden Auslaufkanals (11), eine Feststoffschüttung (14) und ein durch die Leitung (12) zugeführtes Sperrgas zusammen. In der in Fig. 2 dargestellten Schließposition bildet der Schieber (2) den Boden der darüber befindlichen, unten offenen Kammer (13). Zwischen dem unteren Rand der Kammer (13) und dem Schieber (2) besteht ein geringer Abstand üblicherweise im Bereich von 0,2 bis 2 mm, so daß sich der Schieber (2), ohne die Kammer (13) zu berühren, hin und her bewegen läßt. Die Feststoffschüttung (14) auf dem Schieber hat eine Mindesthöhe von 5 mm, so daß sie üblicherweise den Abstandsspalt zwischen dem Kammerrand und dem Schieber (2) abdeckt. Der vertikale Abstand zwischen dem Auslaufende des Kanals (11) und dem Schieber (2) in der Schließposition beträgt zweckmäßigerweise 20 bis 400 mm und vorzugsweise mindestens 40 mm. Der Deckelbereich (13a) der Kammer (13) ist gasdicht mit dem Auslaufkanal (11) verbunden. Im Deckelbereich mündet die Leitung (12) für die Zufuhr von Sperrgas, z. B. Stickstoff oder CO₂, welches von außen mit Hilfe eines Kompressors (15) (vergleiche Fig. 1) durch das geöffnete Ventil (12a) in die Kammer (13) gedrückt wird. Durch dieses Sperrgas wird der Druck in der Kammer (13) etwa auf den Druck eingestellt, wie er im darunter angeordneten Behälter (20) herrscht.

Da im oberen Bereich des Behälters (10), der teilweise mit Feststoffen gefüllt ist, Atmosphärendruck herrscht, strömt Sperrgas von der Leitung (12) durch die Kammer (13) und die Feststoffschüttung (14) in die im Auslaufkanal (11) befindliche Feststoffsäule und von da aufwärts durch die im Behälter (10) befindlichen Feststoffe nach oben und verläßt den Behälter (10) durch eine Entlüftungsleitung (16). Um diesen Strom des Sperrgases zu drosseln, ist es wichtig, daß die Höhe der Feststoffsäule im Auslaufkanal (11) und im Behälter (10) mindestens 1 m und üblicherweise mindestens 2 m beträgt. Die notwendige Höhe der Feststoffsäule richtet sich nach der Druckdifferenz zwischen der Kammer (13) und dem oberen Bereich des Behälters (10). Beim Betrieb der Schleusenvorrichtung ist dafür zu sorgen, daß eine gewisse Mindesthöhe der Feststoffsäule nicht unterschritten wird. Diese Mindesthöhe wird man im Einzelfall durch einen Probebetrieb ermitteln. Auch kann es sich empfehlen, die Feststoffsäule stets bis zum sich erweiternden Teil des Behälters (10) zu halten, wie das in Fig. 1 durch die punktierte Linie (17) angedeutet ist. Durch die Erweiterung des horizontalen Querschnitts in diesem Bereich wird die Geschwindigkeit des aufwärts strömenden Sperrgases reduziert und so einer Auflockerung entgegengewirkt. Dies verbessert die Sperrwirkung der Feststoffsäule.

Das zur Abdichtung zwischen dem ersten Behälter (10) und dem darunter befindlichen zweiten Behälter (20) zusammen mit Fig. 2 Erläuterte gilt ebenso für die Abdichtung zwischen dem zweiten Behälter (20) und dem Vorratsbunker (30) mit dem dort angeordneten Schieber (3). Sowohl der Schieber (2) als auch der Schieber (3) befinden sich in einem Schiebergehäuse (18), dessen Deckelbereich (18a) mit der Kammer (13) gasdicht verbunden ist und das einen Feststoffzulauf (18b) für den darunter befindlichen Behälter aufweist. Der jeweilige Schieber (2) oder (3) kann durch eine Stange (19), die abgedichtet durch das Gehäuse (18) geführt ist, horizontal hin und her bewegt werden, wie das durch den Doppelpfeil (22) angedeutet ist. Für die Abdichtung zwischen dem Gehäuse (18) und der Stange (19) eignet sich z. B. eine Stopfbuchspackung.

Die zum Schieber (3) gehörende Kammer (13) weist ebenfalls eine Sperrgasleitung (12) mit zugehörigem Kompressor (15a) auf. Zwischen dem Bunker (30) und dem darüber befindlichen Behälter (20) besteht eine Druckausgleichsleitung (24) mit Ventil (25), und an die Leitung (24) ist eine weitere Druckausgleichsleitung (26) mit Ventil (29) angesetzt, welche den Druckausgleich zwischen den Behältern (10) und (20) herstellt. Der zweite Behälter (20) ist mit einer absperrbaren Entlüftungsleitung (27) versehen.

Körnige Feststoffe werden folgendermaßen von der Einlaßöffnung (1) in den Bunker (30) überführt, wobei davon ausgegangen wird, daß der Bunker bereits eine gewisse Menge an Feststoffen enthält, daß sich der Schieber (3) in der Schließposition (vergleiche Fig. 1) befindet, daß der Behälter (20) im Bereich seines Auslaufkanals (21) eine Feststoffsäule von mindestens 1 m Höhe enthält, daß Sperrgas durch die Leitung (12), vom Kompressor (15a) kommend, in die Kammer (13) einströmt und aufwärts durch die Feststoffsäule im Kanal (21) strömt, bevor sie den Behälter (20) durch die geöffnete Leitung (27) verläßt. Der Druck im Behälter (20) beträgt in diesem Moment 1 bar und ist gleich dem Druck im Behälter (10), der Schieber (2) ist geöffnet und Feststoffe aus dem ersten Behälter (10) fließen in den zweiten Behälter (20).

Wenn die Feststoffüllung im Behälter (20) die gewünschte Höhe erreicht hat, wird der darüber befindliche Schieber (2) geschlossen und der Behälter (10) mit Feststoffen weitgehend gefüllt. Wenn die Feststoffsäule im Kanal (11) und Behälter (10) die notwendige Höhe erreicht hat, wird Sperrgas vom Kompressor (15) durch die Leitung (12) in die Kammer (13) und gleichzeitig auch durch die Leitung (28) und das geöffnete Ventil (28a) in den Behälter (20) gedrückt. Dabei ist das Ventil (27a) der Entlüftungsleitung (27) und auch das Ventil (29) der Druckausgleichsleitung (26) geschlossen. Wenn der Druck im Behälter (20) den Druck im Bunker (30) erreicht hat, kann der Schieber (3) geöffnet werden, wobei man gleichzeitig das Ventil (25) öffnet, um Druckausgleich zwischen dem Bunker (30) und dem Behälter (20) herzustellen. Wenn die gewünschte Menge an Feststoffen in den Bunker (30) abgeflossen ist, wird der Schieber (3) wieder geschlossen und der Druck im Behälter (20) wieder auf Atmosphärendruck reduziert, wobei man das Entlüftungsventil (27a) öffnet. Während dieser Zeit wird Sperrgas durch den Kompressor (15a) und die Leitung (12) kontinuierlich in die Kammer (13) und in die Feststoffsäule des Auslaufkanals (21) gegeben. Der Schleusvorgang kann nun periodisch fortgesetzt werden.

### Beispiel:

Durch die Schleusenvorrichtung gemäß der Zeichnung mit zugehöriger Beschreibung werden 200 t/h heißes Eisenerz mit einem Kornspektrum zwischen 0 und 2 mm und einer Temperatur von 850°C in einen Reduktionsreaktor (40) eingespeist, in welchem ein Druck von 4 bar herrscht. Die Behälter (10) und (20) haben jeweils ein Fassungsvermögen von 9 m³, ihre Auslaufkanäle (11) und (21) sind 2 m lang und haben einen Durchmesser von 400 mm. In jedem Auslaufkanal mit zugehörigem Behälter (10) oder (20) sorgt man für eine Mindesthöhe der Feststoffsäule von 3 m. Der Abstand zwischen dem Schieber (2) und dem Auslaufende des Kanals (11) beträgt 100 mm, und die Mindesthöhe der Feststoffschüttung auf dem Schieber (2) beträgt 20 mm; das gleiche gilt für den Behälter (10) mit seinem Auslaufkanal (21) und dem zugehörigen Schieber (3). Als Sperrgas wird Stickstoff verwendet, das mit einem Druck von 4,4 bar in die Kammer (13) geleitet wird, wenn diese abdichtend wirken soll. Die Behälter (10) und (20) sind mit an sich bekannten Füllstandsanzeigen versehen. Innerhalb von 5 Minuten werden 8 m heißes Eisenerz durch die beiden Behälter (10) und (20) hindurch in den Bunker (30) geschleust.

Der Bunker (30) enthält neben dem Erzvorrat ein heißes Gasgemisch bestehend aus 80 Vol.-% Wasserstoff, 12 Vol.-% Wasserdampf und 8 Vol.-% Stickstoff, das zeitweilig auch in den Behälter (20) einströmt. Vor dem Auffüllen des Behälters (20) wird er deshalb durch Spülen mit Stickstoff inertisiert, wobei das Ventil (27a) geschlossen und das Ventil (29) geöffnet ist.

## Patentansprüche

1. Verfahren zum Eintragen körniger Feststoffe in einen unter einem Druck von mindestens 2 bar stehenden Druckbehälter (30), wobei die Feststoffe zunächst in einen unter Atmosphärendruck stehenden ersten Behälter (10) und dann in einen darunter angeordneten zweiten Behälter (20) mit variablem Druck gelangen, bevor sie in den Druckbehälter (30) eingetragen werden, und wobei der erste (10) und der zweite (20) Behälter jeweils einen unteren Auslaufkanal (11 bzw. 21) und einen mit dem Auslaufkanal (11; 21) zusammenwirkenden, bewegbaren Schieber (2 bzw. 3) aufweisen, **dadurch gekennzeichnet daß** sich das Auslaufende des Auslaufkanals (11; 21) 20 bis 400 mm über dem Schieber (2 bzw. 3) in der Schließposition befindet, daß der Schieber (2; 3) in der Schließposition den Boden einer mindestens teilweise mit Feststoffen gefüllten Kammer (13) bildet, daß die Kammer (13) gasdicht mit dem Auslaufkanal (11 bzw. 21) verbunden ist und keine Gasdichtigkeit zwischen der Kammer (13) und dem Schieber (2; 3) besteht, daß der Schieber (2; 3) in der Schließposition eine Feststoffschüttung trägt und eine vertikale Feststoffsäule von mindestens 1 m Höhe im Auslaufkanal (11; 21) und im Behälter (10; 20) besteht, und daß in der Schließposition Sperrgas von außen in die Kammer (13) und in die Feststoffsäule gedrückt wird.

2. Verfahren nach Anspruch 1, **dadurch gekennzeichnet, daß** sich der Schieber (2; 3) und mindestens teilweise auch die Kammer (13) in einem Schiebergehäuse (18) befinden, welches den Feststoffzulauf für den darunter angeordneten Behälter (20 bzw. 30) aufweist.

3. Verfahren nach Anspruch 1 oder 2, **dadurch gekennzeichnet, daß** die Feststoffschüttung in der Kammer (13) eine Mindesthöhe von 5 mm hat.

4. Verfahren nach Anspruch 1 oder einem der folgenden, **dadurch gekennzeichnet, daß** der Druck im Druckbehälter (30) 3 bis 20 bar beträgt.

5. Verfahren nach Anspruch 1 oder einem der folgenden, **dadurch gekennzeichnet, daß** das Gas im Druckbehälter (30) zu mindestens 50 Vol.-% aus Wasserstoff besteht.

6. Verfahren nach Anspruch 1 oder einem der folgenden, **dadurch gekennzeichnet, daß** die dem ersten Behälter (10) zugeführten Feststoffe Temperaturen im Bereich von 300 bis 1300°C aufweisen.

## Claims

1. A process of introducing granular solids into a pressure vessel (30) under a pressure of at least 2 bar, wherein the solids first of all reach a first container (10) under atmospheric pressure and then a second container (20) of variable pressure, which is disposed thereunder, before they are introduced into the pressure vessel (30), and wherein the first (10) and the second (20) container each have a lower outlet passage (11; 21) and a movable shutter (2; 3) cooperating with the outlet passage (11; 21), **characterized in that** the outlet end of the outlet passage (11; 21) is 20 to 400 mm above the shutter (2; 3) in the closed position, that in the closed position the shutter (2; 3) forms the bottom of a chamber (13) at least partly filled with solids, that the chamber (13) is connected with the outlet passage (11; 21) in a gastight way and there is no gastightness between the chamber (13) and the shutter (2; 3), that in the closed position the shutter (2; 3) carries a solid bed and a vertical solid column having a height of at least 1 m is present in the outlet passage (11; 21) and in the container (10; 20), and that in the closed position seal gas is pressed into the chamber (13) and into the solid column from the outside.

2. The process as claimed in claim 1, **characterized in that** the shutter (2; 3) and at least in part also the chamber (13) are disposed in a shutter housing (18), which has the solids inlet for the container (20; 30) disposed thereunder.

3. The process as claimed in claim 1 or 2, **characterized in that** the solid bed in the chamber (13) has a minimum height of 5 mm.

4. The process as claimed in claim 1 or any of the following claims, **characterized in that** the pressure in the pressure vessel (30) is 3 to 20 bar.

5. The process as claimed in claim 1 or any of the following claims, **characterized in that** the gas in the pressure vessel (30) consists of hydrogen for at least 50 Vol-%.

6. The process as claimed in claim 1 or any of the following claims, **characterized in that** the solids supplied to the first container (10) have temperatures in the range from 300 to 1300°C.

## Revendications

1. Procédé d'introduction de substances solides granuleuses dans un récipient à pression (30) placé sous une pression d'au moins 2 bars, les substances solides arrivant tout d'abord dans un premier récipient (10) placé sous pression atmosphérique puis dans une second récipient (20) situé en dessous et avec une pression variable, avant qu'ils ne soient transportés dans le récipient à pression (30), le premier (10) et le second (20) récipients étant chacun munis d'un canal d'écoulement (11 ou 21 respectivement) inférieur et d'une vanne (2 ou 3 respectivement) mobile coopérant avec le canal d'écoulement (11, 21), **caractérisé en ce que** l'extrémité d'écoulement du canal d'écoulement (11, 21) se situe entre 20 et 400 mm au-dessus de la vanne (2 ou 3 respectivement) en position fermée, **en ce que** la vanne (2, 3) en position fermée forme le fond d'un compartiment (13) rempli au moins partiellement de substances solides, **en ce que** le compartiment (13) est relié de façon étanche au gaz au canal d'écoulement (11 ou 21 respectivement) et qu'il n'y a pas d'étanchéité au gaz entre le compartiment (13) et la vanne (2, 3), **en ce que** la vanne (2, 3) en position fermée porte un déversement de substances solides et qu'il y a une colonne d'au moins 1 m de haut dans le canal d'écoulement (11, 21) et dans le récipient (10, 20), et **en ce que** dans la position fermée du gaz de blocage est introduit sous pression de l'extérieur dans le compartiment (13) et dans la colonne de substance solide.

2. Procédé selon la revendication 1, **caractérisé en ce que** la vanne (2, 3) ainsi qu'au moins une partie du compartiment (13) se trouvent dans un boîtier de vanne (18) qui présente l'amenée de substance solide pour le récipient (20, 30) situé en dessous.

3. Procédé selon la revendication 1 ou 2, **caractérisé en ce que** le déversement de substances solides dans le compartiment (13) a une hauteur minimale de 5 mm.

4. Procédé selon la revendication 1 ou une des revendications suivantes, **caractérisé en ce que** la pression dans le récipient à pression (30) est comprise entre 3 et 20 bars.

5. Procédé selon la revendication 1 ou une des revendications suivantes, **caractérisé en ce que** le gaz contenu dans le récipient à pression (30) se compose d'au moins 50 % en volume d'hydrogène.

6. Procédé selon la revendication 1 ou une des revendications suivantes, **caractérisé en ce que** les substances solides introduites dans le premier récipient (10) ont une température située dans un domaine compris entre 300 et 1 300 °C.
